# EUROPÄISCHE PATENTANMELDUNG

(11) **EP 4 459 073 A1**
(43) Veröffentlichungstag der Anmeldung: **06.11.2024**
(21) Anmeldenummer: 24171997.0
(22) Anmeldetag: 23.04.2024
(51) Int. Cl.: E04G 23/02, E04G 21/12, F16B 25/00, F16B 39/22

(54) **VERSTÄRKUNG FÜR EINEN PORENBETONTRÄGER, PORENBETONTRÄGER, VERWENDUNG EINES PORENBETONTRÄGERS, VERFAHREN ZUM VERSTÄRKEN EINES PORENBETONTRÄGERS UND VERWENDUNG EINER VERSTÄRKUNG**

(30) Priorität: 02.05.2023 DE 102023111184
(71) Anmelder: Adolf Würth GmbH & Co. KG, 74653 Künzelsau (DE)
(72) Erfinder: GERHARD, Andreas, 90427 Nürnberg (DE); RÖCK, David, 86169 Augsburg (DE); SKLAROV, Nikolai, 90766 Fürth (DE)
(74) Vertreter: Patentanwälte Ruff, Wilhelm, Beier, Dauster & Partner mbB

(57) **Zusammenfassung**

Die Erfindung betrifft eine Verstärkung für einen Porenbetonträger mit mehreren Porenbetonschrauben, wobei jede Porenbetonschraube einen Kopf mit einer Antriebsausbildung und einen zylindrischen Schaft aufweist, mit wenigstens einer langgestreckten Unterstützungsschiene mit mehreren, im Abstand zueinander angeordneten Durchgangsöffnungen zum Durchstecken von jeweils einer Porenbetonschraube und mit einem fließfähigen Kleber zum Einbringen in mehrere Bohrlöcher in dem Porenbetonträger, wobei die Bohrlöcher zum Einschrauben der Porenbetonschrauben ausgebildet und angeordnet sind, bei der jede Porenbetonschraube mit einem Gewinde versehen ist, das sich ausgehend von einem freien Ende des Schafts in Richtung auf den Kopf der Porenbetonschraube erstreckt, wobei das Gewinde sich maximal über 50 % der Länge des Schafts erstreckt, bei der die langgestreckte Unterstützungsschiene in Form einer außenliegenden Bewehrung für die Anordnung auf einer ersten Außenseite des Porenbetonträgers ausgebildet ist, wobei die erste Außenseite einer zweiten Außenseite, auf die eine Haupttraglast aufgebracht wird, gegenüberliegt, und bei der der fließfähige Kleber niedrigviskos ist und in einem nicht ausgehärteten, fließfähigen Zustand, in dem er in ein Bohrloch eingebracht wird, beim Einschrauben der Porenbetonschraube in das Bohrloch in die Poren des Porenbetonträgers eingepresst werden und dort aushärten kann.

## Beschreibung

Die Erfindung betrifft eine Verstärkung für einen Porenbetonträger. Die Erfindung betrifft auch einen Porenbetonträger. Die Erfindung betrifft weiter eine Verwendung eines Porenbetonträgers, ein Verfahren zum Verstärken eines Porenbetonträgers und eine Verwendung einer Verstärkung.

Porenbetonträger werden in Bauwerken eingesetzt, beispielsweise in Industriebauten als Dachelemente. Die Porenbetonträger liegen dabei beidseitig auf Auflagern auf. Auf der Oberseite der Porenbetonträger wird dann noch eine Abdichtung angeordnet. Porenbetonträger können auch als Fassadenelemente verwendet werden, beispielsweise aber auch als Fenstersturz oder Türensturz. Insbesondere bei der Verwendung als Dachelemente und als Fassadenelemente ist es zum Teil unmöglich, eine Solaranlage auf das Dach oder an die Fassade zu montieren, da die Tragfestigkeit der Porenbetonträger für die zusätzliche Belastung durch eine Solaranlage nicht hoch genug ist. Auch beim Anlegen einer Dachbegrünung kann es vorkommen, dass die Tragfähigkeit der als Dachelemente verwendeten Porenbetonträger nicht ausreichend ist.

Mit der Erfindung sollen eine Verstärkung für einen Porenbetonträger, ein Porenbetonträger, eine Verwendung eines Porenbetonträgers, ein Verfahren zum Verstärken eines Porenbetonträgers und eine Verwendung einer Verstärkung verbessert werden.

Erfindungsgemäß sind hierzu die Gegenstände der unabhängigen Ansprüche 1, 6, 15, 19 und 22 vorgesehen. Vorteilhafte Weiterbildungen der Erfindung sind jeweils in den Unteransprüchen angegeben.

Eine Verstärkung für einen Porenbetonträger weist mehrere sogenannte Porenbetonschrauben auf, wobei jede Porenbetonschraube einen Kopf mit einer Antriebsausbildung und einen zylindrischen Schaft aufweist. Die Verstärkung weist weiter wenigstens eine langgestreckte Unterstützungsschiene mit mehreren, im Abstand zueinander angeordneten Durchgangsöffnungen zum Durchstecken von jeweils einer Porenbetonschraube auf. Weiter weist die Verstärkung einen fließfähigen Kleber zum Einbringen in mehrere Bohrlöcher in dem Porenbetonträger auf. Die Bohrlöcher sind zum Einschrauben der Porenbetonschrauben ausgebildet und angeordnet. Die Porenbetonschrauben sind mit einem Gewinde versehen, das sich ausgehend von einem freien Ende des Schafts in Richtung auf den Kopf der Porenbetonschraube erstreckt, wobei das Gewinde sich maximal über 50 % der Länge des Schafts erstreckt. Die langgestreckte Unterstützungsschiene ist in Form einer außenliegenden Bewehrung für die Anordnung auf einer ersten Außenseite des Porenbetonträgers ausgebildet, wobei die erste Außenseite einer zweiten Außenseite, auf die eine Haupttraglast aufgebracht wird, gegenüberliegt. Die langgestreckte Unterstützungsschiene besteht aus einem biegesteifen Material wie Stahl, Aluminium oder auch verstärktem Kunststoff. Der fließfähige Kleber ist niedrigviskos und kann in einem nicht ausgehärteten, fließfähigen Zustand, in dem er in ein Bohrloch eingebracht wird, beim Einschrauben der Porenbetonschraube in das Bohrloch in die Poren des Porenbetonträgers eingepresst werden und kann dann dort aushärten. Der fließfähige, vorzugsweise zweikomponentige Kleber weist keine oder wenige Füllstoffe wie Sand, Glas oder andere Zusatzstoffe auf, damit ein Fließen und Verpressen des Klebers in den Untergrund, insbesondere das Eindringen des Klebers in die Poren des Porenbetons, erleichtert wird. Die Durchgangsöffnungen in der Unterstützungsschiene können gleichmäßig voneinander beabstandet sein, bei Bedarf können die Durchgangsöffnungen jedoch auch gegenüber einem gleichmäßigen Abstand näher oder weiter voneinander entfernt sein. Dies kann insbesondere dann vorgesehen sein, wenn der verstärkte Porenbetonträger einer punktuell höheren Belastung ausgesetzt ist. Die Durchgangsöffnungen können an ihrer, dem Porenbetonträger abgewandten Seite mit einer zusätzlichen Senkung versehen sein, damit die eingebrachte Porenbetonschraube, ebenfalls mit einem Senkkopf versehen, oberflächenbündig in die Unterstützungsschiene eingebracht werden kann. Dies führt dazu, dass eine seitliche Bewegnung der Unterstützungsschiene relativ zur Porenbetonschraube bei Belastung nahezu ausgeschlossen werden kann. Weiterhin ist es vorteilhaft, wenn die sich ergebenden freien Zwischenräume zwischen dem Durchmesser eines zylindrischen Abschnitts der Durchgangsöffnungen und dem Schraubenschaftdurchmesser bei der Montage mit einer aushärtbaren Masse vergossen werden, insbesondere wenn der fließfähige Kleber in diese Zwischenräume eindringt. Auch dies minimiert eine eventuelle freie Bewegung des Schraubenschafts in der Durchgangsöffnung bzw. eine relative Bewegung der Unterstützungsschiene zur Porenbetonschraube.

Beispielsweise weist der Kleber im fließfähigen Zustand die Viskosität von warmem Bienenhonig auf. Dies reicht aus, dass der Kleber nicht nur in das Bohrloch eingebracht werden kann, sondern dass der Kleber dann auch beim Einschrauben der Porenbetonschraube in die Poren des Porenbetonträgers eingepresst werden kann, und zwar in dem Bereich, der die Wandung des Bohrlochs unmittelbar umgibt. Dies hat den Vorteil, dass das Gewinde der Porenbetonschraube dann in Bereiche des Porenbetons eingreift, die mit dem Kleber getränkt sind. Die Porenbetonschraube kann dadurch sicher und mit hoher Haltekraft in dem Porenbeton des Porenbetonträgers verankert werden. Die Tragfähigkeit oder Versagenslast der Porenbetonschrauben beträgt bei Verwendung des fließfähigen Klebers das fünffache bis siebenfache der Versagenslast einer ohne Verwendung des Klebers in den Porenbetonträger eingeschraubten Porenbetonschraube bei sonst identischen Parametern. Beispielsweise wird mit einer Porenbetonschraube eine Versagenslast im Porenbeton von 300kg ohne Kleber erzielt, unter Verwendung des Klebers wird dann eine Versagenslast von 2t pro Porenbetonschraube erzielt.

In Weiterbildung der Erfindung ist die wenigstens eine Unterstützungsschiene als faserverstärkte Kunststoffschiene oder als Aluminiumschiene ausgebildet.

Kunststoffschienen und Aluminiumschienen sind korrosionsfest und überraschenderweise genügt das Vorsehen einer Kunststoffschiene oder Aluminiumschiene, um einen Porenbetonträger ausreichend zu verstärken. Als faserverstärkte Kunststoffschiene kann beispielsweise glasfaserverstärkter Kunststoff, insbesondere glasfaserverstärktes Epoxidharz verwendet werden. Sowohl faserverstärkte Kunststoffschienen als auch Aluminiumschienen sind gegenüber Stahlschienen sehr leicht und dadurch auch bei Überkopfmontage gut handhabbar. Die erfindungsgemäße Verstärkung der Porenbetonträger kann an bestehenden Bauwerken nachgerüstet werden. Bei der Nachrüstung von Porenbetonträgern, die als Dachelemente verwendet werden, muss die Verstärkung in Überkopfarbeit angebracht werden. Sowohl Aluminiumschienen als auch faserverstärkte Kunststoffschienen können ausreichend zugfest ausgebildet werden, um bei Einsatz der Verstärkung einen Zugbandeffekt ausüben zu können. Die Unterstützungsschienen werden bei dem erfindungsgemäßen Porenbetonträgern auf Zug belastet. Solche Zugkräfte können auch leichtgewichtige Unterstützungsschienen aus Aluminium oder faserverstärktem Kunststoff problemlos aufnehmen.

In Weiterbildung der Erfindung sind die Durchgangsöffnungen in der Unterstützungsschiene gleichmäßig voneinander beabstandet.

In Weiterbildung der Erfindung ist der Schaft der wenigstens einen Porenbetonschraube kürzer als die Dicke des Porenbetonträgers, aber länger als die Hälfte der Dicke des Porenbetonträgers, insbesondere beträgt die Länge des Schafts der wenigstens einen Porenbetonschraube zwischen 60 % und 90 %, insbesondere 75 % der Dicke des Porenbetonträgers.

Auf diese Weise kann das Gewinde der PorenPorenbetonschraube in einer Druckzone des Porenbetonträgers angeordnet werden, wenn die Bohrlöcher ausgehend von der Seite des Porenbetonträgers eingebracht werden, in der im Belastungsfall die Zugzone liegt. Die Unterstützungsschiene liegt dann auf der Außenseite an, auf die die Zugzone des Porenbetonträgers folgt.

In Weiterbildung der Erfindung beträgt die Länge des gewindefreien Abschnitts des Schafts der wenigstens einen Porenbetonschraube zwischen 40 % und 70 % der Dicke des Porenbetonträgers.

Auf diese Weise können die Porenbetonschrauben so angeordnet werden, dass das Gewinde im Belastungsfall ausschließlich in der neutralen Phase und/oder in der Druckzone des Porenbetonträgers angeordnet ist, in der Zugzone hingegen der gewindefreie Abschnitt des Schafts angeordnet ist. Eine Längung des Porenbetonträgers in der Zugzone kann dadurch nicht zu einer verringerten Haltekraft der Porenbetonschraube führen.

In Weiterbildung der Erfindung ist ein Gewindedurchmesser des Gewindes der Porenbetonschrauben zwischen 10% und 65% größer als ein Kerndurchmesser des Gewindes der Porenbetonschrauben. Damit kann das Gewinde der Porenbetonschraube in den Porenbeton eindringen, der das Bohrloch in den Porenbetonträger umgibt, und auch schon vor dem Aushärten des Klebers entsteht durch den beim Einschrauben entstandenen Hinterschnitt des Gewindes eine Tragkraft, die zumindest das Eigengewicht der Unterstützungsschiene alleine tragen kann und ein leichtes Überdrehen der Schraube beim Einschrauben in das vorgebohrte Bohrloch sicher verhindert. Die erfindungsgemäße Verstärkung kann dadurch prozesssicher angebracht werden.

In Weiterbildung der Erfindung sind die Durchgangsöffnungen in der Unterstützungsschiene kegelstumpfförmig angesenkt und eine Unterseite von Köpfen der Porenbetonschrauben ist mit einer hierzu passenden Kegelstumpfform versehen.

Die Durchgangsöffnungen sind somit angesenkt und die Porenbetonschrauben sind als Senkschrauben ausgebildet. Nach dem Anziehen der Porenbetonschrauben ist dadurch die Unterstützungsschiene relativ zu den Porenbetonschrauben nicht mehr beweglich, da die Unterseite des Kopfes der Porenbetonschrauben spielfrei in den Ansenkungen der Durchgangsöffnungen angeordnet ist. Im weiteren Verlauf der Durchgangsöffnungen können diese kreiszylinderförmig ausgebildet sein und, um das Gewinde der Porenbetonschrauben durchstecken zu können, muss ein Zwischenraum zwischen dem zylindrischen Abschnitt der Durchgangsöffnung und dem zylindrischen Schaft der Porenbetonschraube vorhanden sein. In diesen Zwischenraum dringt beim Einschrauben der Porenbetonschraube in das Bohrloch der durch die Porenbetonschraube verdrängte fließfähige Kleber ein und füllt damit diesen Zwischenraum aus. Auch dadurch wird eine relative Beweglichkeit der Unterstützungsschiene zu den Porenbetonschrauben zuverlässig verhindert. Der fließfähige, vorzugsweise zweikomponentige Kleber weist keine oder wenige Füllstoffe wie Sand, Glas oder andere Zusatzstoffe auf, damit ein Fließen bzw. Verpressen des Klebers in den Untergrund bzw. den Porenbeton, der das Bohrloch umgibt, sowie auch in den Zwischenraum zwischen der Innenwandung der Durchgangsöffnung der Unterstützungsschiene und der Außenwand des Schraubenschafts erleichtert wird.

Ein erfindungsgemäßer Porenbetonträger ist mit einer erfindungsgemäßen Verstärkung versehen, wobei die Verstärkung wenigstens eine langgestreckte Unterstützungsschiene mit mehreren, im Abstand voneinander angeordneten Durchgangsöffnungen und mehrere Porenbetonschrauben aufweist, wobei die Unterstützungsschiene auf einer ersten Außenseite des Porenbetonträgers angeordnet ist und die Porenbetonschrauben durch die Durchgangsöffnungen in der Unterstützungsschiene hindurchgesteckt und in Bohrlöcher in dem Porenbetonträger eingeschraubt sind, so dass eine Unterseite eines Kopfs der Porenbetonschrauben an einer Oberseite der Unterstützungsschiene anliegt, wobei ein Durchmesser der Bohrlöcher gleich einem Kerndurchmesser, 10% kleiner oder 10% größer als der Kerndurchmesser der Porenbetonschrauben ist, so dass das Gewinde der Porenbetonschraube in den Porenbeton eingreift, wobei vor dem Einschrauben der Porenbetonschrauben in die Bohrlöcher ein fließfähiger Kleber in die Bohrlöcher eingebracht wird, wobei beim Einschrauben der Porenbetonschrauben der fließfähige Kleber wenigstens abschnittsweise in den, das Bohrloch umgebenden Bereich des Porenbetons eingepresst wird und dort aushärtet, so dass im ausgehärteten Zustand des Klebers das Gewinde der Porenbetonschraube in Bereiche des Porenbetons eingreift, die mit dem ausgehärteten Kleber durchsetzt sind, und wobei das Gewinde der Porenbetonschrauben an einem vom Kopf der Porenbetonschraube beabstandeten Ende des Schafts beginnt und in einem Abstand von der Unterseite des Kopfs der Porenbetonschraube endet.

In Weiterbildung der Erfindung liegt ein Durchmesser der Bohrlöcher zwischen 90 % und 100 % des Kerndurchmessers des Schafts der Porenbetonschraube.

In Weiterbildung der Erfindung erstreckt sich das Gewinde der Porenbetonschraube über maximal 50 % der Länge des Schafts der Porenbetonschraube.

In Weiterbildung der Erfindung weist ausgehend von der ersten Außenseite des Porenbetonträgers, auf der die Unterstützungsschiene angeordnet ist, der gewindefreie Bereich des Schafts eine Länge auf, die zwischen 25 % und 75 % der Dicke des Porenbetonträgers beträgt.

In Weiterbildung der Erfindung ist das Gewinde der Porenbetonschraube ausschließlich in einem Bereich des Porenbetonträgers angeordnet, der in Dickenrichtung gesehen in der Hälfte des Porenbetonträgers liegt, die von der ersten Außenseite, auf der die Unterstützungsschiene aufliegt, beabstandet ist.

Auf diese Weise ist es möglich, das Gewinde ausschließlich in die Druckzone des Porenbetonträgers zu legen, wenn dieser belastet ist.

In Weiterbildung der Erfindung ist die Unterstützungsschiene auf der ersten Außenseite des Porenbetonträgers angeordnet und die erste Außenseite liegt der zweiten Außenseite des Porenbetonträgers, die für das Aufbringen der Hauptlast vorgesehen ist, gegenüber.

Auf diese Weise wird die Verstärkung als sogenannte außenliegende Bewehrung aufgebracht. Die Verstärkung des Porenbetonträgers erfolgt somit auf der Zugseite, gegenüberliegend der Druckseite, auf die die Hauptlast aufgebracht wird.

Die erfindungsgemäße Verstärkung ist unabhängig von einer eventuellen innenliegenden Armierung des Porenbetonträgers. Wenn eine oder mehrere Porenbetonschrauben die innenliegende Armierung des Porenbetonträgers berühren, so ist dies unschädlich. Bei üblichen Porenbetonträgern ist die Lage der Armierungen in der Regel bekannt, so dass die Bohrlöcher in den Porenbetonträgern so gesetzt werden können, dass diese die Armierung des Porenbetonträgers nicht kreuzen beziehungsweise berühren.

In Weiterbildung der Erfindung sind mehrere Unterstützungsschienen auf der ersten Außenseite des Porenbetonträgers parallel zueinander und in einem Abstand zueinander angeordnet.

Auf diese Weise können auch breite Porenbetonträger gleichmäßig verstärkt werden.

In Weiterbildung der Erfindung erstreckt sich die wenigstens eine Unterstützungsschiene im Wesentlichen über die gesamte Länge des Porenbetonträgers oder die wenigstens eine Unterstützungsschiene erstreckt sich über den gesamten zugänglichen Bereich der ersten Außenseite des Porenbetonträgers zwischen Auflagern des Porenbetonträgers.

Die Unterstützungsschiene oder die Unterstützungsschienen können somit bis in den Bereich des Auflagers des Porenbetonträgers reichen oder beim Nachrüsten der Verstärkung sich nur zwischen den Auflagern des Porenbetonträgers erstrecken.

Bei einer Verwendung eines erfindungsgemäßen Porenbetonträgers in einem Bauwerk kann die Unterstützungsschiene als außenliegende Bewehrung auf einer ersten Außenseite des Porenbetonträgers angeordnet sein, die einer zweiten Außenseite des Porenbetonträgers, an der eine Hauptlast anliegt, gegenüberliegt.

In Weiterbildung der Erfindung erstreckt sich die wenigstens eine Unterstützungsschiene auf der ersten Außenseite des Porenbetonträgers über die gesamte Länge zwischen Auflagern des Porenbetonträgers.

Auf diese Weise ist eine Nachrüstung der erfindungsgemäßen Verstärkung möglich.

In Weiterbildung der Erfindung bildet die erste Außenseite eine Unterseite des Porenbetonträgers und die zweite Außenseite eine Oberseite des Porenbetonträgers.

In Weiterbildung der Erfindung wird der Porenbetonträger in einem Bauwerk als Dachelement, als Fassadenelement und/oder als Fenstersturz- oder Türsturzelement eingesetzt.

Bei einem Verfahren zum Verstärken eines Porenbetonträgers mit einer erfindungsgemäßen Verstärkung sind folgende Schritte vorgesehen: Bohren von mehreren Bohrlöchern in eine erste Außenseite des Porenbetonträgers, wobei die Bohrlöcher einen Durchmesser haben, der kleiner oder gleich einem Kerndurchmesser der Porenbetonschrauben der Verstärkung ist, wobei die Bohrlöcher eine Tiefe haben, die größer ist als die halbe Dicke des Porenbetonträgers und kleiner ist als die Dicke des Porenbetonträgers, Anordnen der wenigstens einen Unterstützungsschienen der Verstärkung auf einer ersten Außenseite des Porenbetonträgers, Einbringen des fließfähigen Klebers der Verstärkung in die Bohrlöcher, Durchstecken der Porenbetonschrauben durch die Durchgangsöffnungen in der Unterstützungsschiene und Einschrauben der Porenbetonschrauben in die Bohrlöcher, bevor der fließfähige Kleber in den Bohrlöchern ausgehärtet ist, wobei die Bohrschrauben in die Bohrlöcher eingeschraubt werden, bis eine Unterseite des Kopfs der Porenbetonschrauben auf einer Oberseite der Unterstützungsschiene aufliegt.

Mit dem erfindungsgemäßen Verfahren können in einem Bauwerk angeordnete Porenbetonträger mit einer Verstärkung nachgerüstet werden. Auf diese Weise wird beispielsweise das Anordnen von Solaranlagen oder Dachgärten auf Dächern möglich, die mit Porenbetonträgern aufgebaut sind und bei denen eine Verstärkung der Porenbetonträger erforderlich ist, um die dann erhöhte Dachlast zu tragen.

In Weiterbildung der Erfindung werden mehrere Unterstützungsschienen auf der ersten Außenseite des Porenbetonträgers angeordnet, wobei die Unterstützungsschienen parallel und im Abstand zueinander angeordnet werden.

Auf diese Weise können beispielsweise Porenbetonträger, die als Dachelemente oder Fassadenelement dienen und sehr breit sind, gleichmäßig verstärkt werden.

In Weiterbildung der Erfindung ist die Unterstützungsschiene der Verstärkung so bemessen und wird so angeordnet, dass sich die Unterstützungsschiene entweder im Wesentlichen über die gesamte Länge des Porenbetonträgers erstreckt oder dass sich die Unterstützungsschiene über die gesamte Länge eines Bereichs der ersten Außenseite erstreckt, der zwischen den Auflagern des Porenbetonträgers zugänglich ist.

Eine erfindungsgemäße Verstärkung kann so verwendet werden, dass sie zum Verstärken eines Porenbetonträgers verwendet wird.

In Weiterbildung der Erfindung ist der Porenbetonträger als Dachelement oder als Fassadenelement eines Bauwerks verbaut.

Weitere Merkmale und Vorteile der Erfindung ergeben sich aus den Ansprüchen und der folgenden Beschreibung bevorzugter Ausführungsformen der Erfindung im Zusammenhang mit den Zeichnungen. Einzelmerkmale der unterschiedlichen, dargestellten und beschriebenen Ausführungsformen lassen sich dabei in beliebiger Weise miteinander kombinieren, ohne den Rahmen der Erfindung zu überschreiten. Dies gilt auch für die Kombination von Einzelmerkmalen ohne weitere Einzelmerkmale, mit denen sie im Zusammenhang dargestellt und/oder beschrieben sind. In den Zeichnungen zeigen:
- Fig. 1: eine Ansicht eines erfindungsgemäßen Porenbetonträgers gemäß einer ersten Ausführungsform von schräg oben,
- Fig. 2: eine Seitenansicht eines erfindungsgemäßen Porenbetonträgers gemäß einer zweiten Ausführungsform,
- Fig. 3: eine schematische Schnittansicht eines erfindungsgemäßen Porenbetonträgers gemäß einer dritten Ausführungsform,
- Fig. 4: eine abschnittsweise Seitenansicht eines erfindungsgemäßen Porenbetonträgers gemäß einer vierten Ausführungsform,
- Fig. 5: eine Unteransicht eines erfindungsgemäßen Porenbetonträgers gemäß einer fünften Ausführungsform,
- Fig. 6: eine Schnittansicht des Porenbetonträgers der Fig. 5 im eingebauten Zustand in ein Bauwerk,
- Fig. 8: den Porenbetonträger der Fig. 5 und zwei weitere, identische Porenbetonträger in einer abschnittsweisen Schnittansicht in eingebautem Zustand und

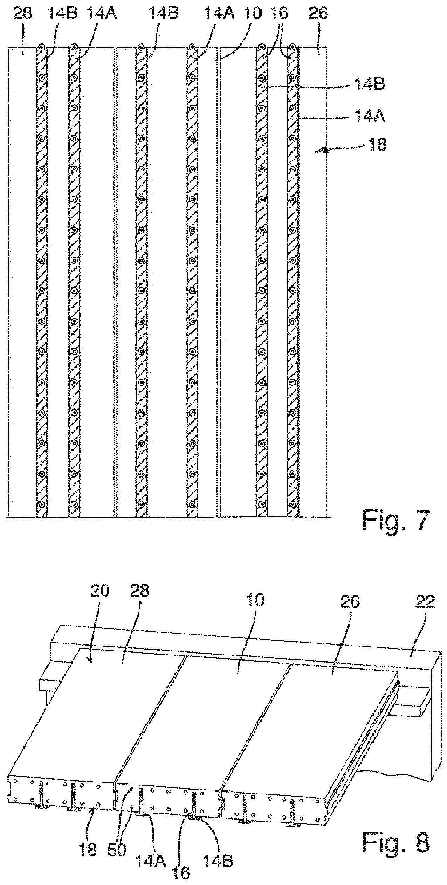

- Fig. 7: eine abschnittsweise Unteransicht der Porenbetonträger der Fig. 8.

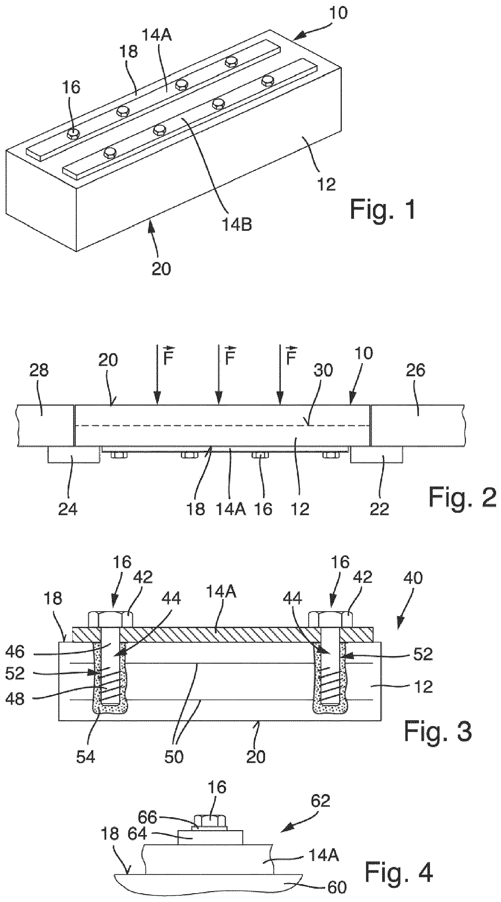

Fig. 1 zeigt einen erfindungsgemäßen Porenbetonträger 10 gemäß einer ersten Ausführungsform der Erfindung. Der Porenbetonträger 10 besteht aus quaderförmig geformtem Porenbeton 12. Innerhalb des quadergeformten Porenbetons 12 können Armierungen vorgesehen sein, die in Fig. 1 aber nicht erkennbar sind, vgl. aber Fig. 3. Der Porenbetonträger 10 ist mit einer Verstärkung versehen, wobei die Verstärkung zwei langgestreckte Unterstützungsschienen 14A, 14B aufweist, die sich im Wesentlichen über die gesamte Länge des Porenbetonträgers erstrecken und die parallel zueinander und im Abstand zueinander angeordnet sind. Der Abstand zwischen den beiden Unterstützungsschienen 14A, 14B beträgt etwa das Doppelte des Abstands der Seitenschiene 14A zu der in Fig. 1 hinten liegenden Seitenkante bzw. des Abstands der Unterstützungsschiene 14B zu der in Fig. 1 vorne liegenden Seitenkante.

Die Unterstützungsschienen 14A, 14B sind jeweils mit vier Durchgangsöffnungen versehen, die in Fig. 1 verdeckt sind, und durch die jeweils eine Porenbetonschraube 16 durchgesteckt ist. Die Porenbetonschrauben 16 sind in nicht sichtbarer Weise in Bohrlöcher im Porenbeton 12 des Porenbetonträgers 10 eingeschraubt. Die Porenbetonschrauben 16 liegen mit der Unterseite ihres jeweiligen Kopfs auf der Oberseite der jeweiligen Unterstützungsschiene 14A, 14B an und spannen die Unterstützungsschiene 14A, 14B gegen eine erste Außenseite 18 des Porenbetonträgers 10 vor. Vor dem Einschrauben der Porenbetonschrauben 16 in die Bohrlöcher wird ein fließfähiger Kleber in die Bohrlöcher eingefüllt. Der fließfähige Kleber ist niedrigviskos und hat etwa die Viskosität von warmem Honig. Beim Einschrauben der Porenbetonschrauben 16 in die Bohrlöcher wird der fließfähige Kleber in Bereiche des Porenbetons 12 eingepresst, die an die jeweilige Bohrlochwandung angrenzen. Der Durchmesser der Bohrlöcher ist geringfügig kleiner oder gleich dem Kerndurchmesser des Schafts der Porenbetonschrauben 16. Das Gewinde der Porenbetonschrauben greift damit in Bereiche des Porenbetons 12 ein, die mit dem fließfähigen Kleber durchtränkt wurden. Im ausgehärteten Zustand des Klebers ist die Tragfestigkeit des Porenbetons durch den ausgehärteten Kleber wesentlich erhöht. Damit ist auch die Haltekraft der Porenbetonschrauben gegenüber Porenbetonschrauben, die in Bohrlöcher ohne fließfähigen Kleber eingeschraubt werden, wesentlich erhöht.

Die erfindungsgemäße Verstärkung mit den Unterstützungsschienen 14A, 14B, den Porenbetonschrauben 16 und dem fließfähigen Kleber erhöht die Tragfähigkeit des Porenbetonträgers 10 erheblich. Die Verstärkung wird dabei so angeordnet, dass die erste Außenseite 18 gegenüber einer zweiten Außenseite 20 liegt, auf die die Hauptlast auf den Porenbetonträger 10 aufgebracht wird.

Bei Verwendung des Porenbetonträgers 10 als Dachelement würde infolgedessen die zweite Außenseite 20 oben liegen und die erste Außenseite 18 unten.

Fig. 2 zeigt den Porenbetonträger 10 der Fig. 1 im eingebauten Zustand als Dachelement. An seinem in Fig. 2 rechten Ende liegt der Porenbetonträger 10 auf einem ersten Auflager 22 auf. An seinem in Fig. 2 linken Ende liegt der Porenbetonträger 10 auf einem zweiten Auflager 24 auf. Die beiden Auflager 22, 24 bilden beispielsweise Teile einer Dachkonstruktion. Neben dem Porenbetonträger 10 sind abschnittsweise weitere Porenbetonträger 26, 28 angedeutet, die ebenfalls Teil der Dachfläche bilden.

Soll nun auf eine bestehende Dachkonstruktion, beispielsweise die Dachkonstruktion einer Industriehalle, eine Solaranlage aufgebracht werden oder ein Dachgarten, gegebenenfalls lediglich eine Dachbegrünung, so überschreitet die zusätzliche Belastung durch die Solaranlagen und/oder die Dachbegrünung in der Regel die erlaubte Tragkraft der Porenbetonträger 10, 26, 28. Mit der Erfindung kann der Porenbetonträger 10 und selbstverständlich auch die weiteren Porenbetonträger 26, 28 verstärkt werden, so dass sie eine erhöhte Tragfähigkeit haben. Dies ermöglicht es, Dächer oder auch Fassaden aus Porenbetonträgern so zu verstärken, dass Solaranlagen auf den Dächern und an den Fassaden und beispielsweise auch eine Dachbegrünung auf einem Dach angeordnet werden können.

Hierzu wird in der anhand von Fig. 1 beschriebenen Weise eine Verstärkung mit den Unterstützungsschienen 14A, 14B und Porenbetonschrauben 16 an der ersten Außenseite 18 des Porenbetonträgers 10 angeordnet, wobei die erste Außenseite 18 in Fig. 2 die Unterseite des Porenbetonträgers 10 bildet. Eine Dachlast wirkt infolgedessen auf die gegenüberliegende zweite Außenseite 20 des Porenbetonträgers 10. Die Dachlast ist durch mehrere Pfeile F symbolisiert.

In Fig. 2 ist eine gedachte gestrichelte Linie 30 eingezeichnet, die genau auf der Hälfte der Dicke des Porenbetonträgers 10 angeordnet ist. Unterhalb der gestrichelten Linie 30 liegt bei Belastung des Porenbetonträgers 10 die sogenannte Zugzone, in der also der Porenbeton 12 des Porenbetonträgers 10 leicht in die Länge gezogen wird. Oberhalb der gestrichelten Linie 30 liegt die sogenannte Druckzone des Porenbetonträgers 10, in der der Porenbeton 12 bei Belastung leicht zusammengedrückt wird.

Die Unterstützungsschienen 14A, 14B verringern eine Durchbiegung des Porenbetonträgers 10 bei Belastung F und können dadurch die Tragkraft des Porenbetonträgers 10 erhöhen.

Der Porenbetonträger 10 der Fig. 2 wurde mit der Verstärkung, also den Unterstützungsschienen 14A, 14B und den Porenbetonschrauben 16 nachgerüstet. Wenn ein Porenbetonträger vor seiner Anordnung in einem Bauwerk verstärkt werden soll, können sich die Unterstützungsschienen 14A, 14B auch über die vollständige Länge des Porenbetonträgers erstrecken. Die Unterstützungsschienen lägen dann zusätzlich noch auf den Auflagern 22, 24 auf.

Erfindungsgemäß sind die Porenbetonschrauben 16 so bemessen, dass das Gewinde der Porenbetonschrauben 16 ausschließlich oder zumindest zum größten Teil in der Druckzone oberhalb der gestrichelten Linie 30 angeordnet ist, vgl. auch Fig. 3. Ein gewindefreier Bereich des Schafts der Porenbetonschrauben 16 ist hingegen in der Zugzone unterhalb der gestrichelten Linie 30 angeordnet.

Fig. 3 zeigt eine schematische Schnittansicht eines erfindungsgemäßen Porenbetonträgers 40 gemäß einer weiteren Ausführungsform der Erfindung.

In der schematischen Schnittansicht ist zu erkennen, dass jede der Porenbetonschrauben 16 einen Kopf 42 mit einer Antriebsausbildung und einen zylindrischen Schaft 44 aufweist. Die Antriebsausbildung am Kopf 42 ist jeweils als Außensechskant ausgebildet, kann im Rahmen der Erfindung aber auch beliebig ausgebildet sein, beispielsweise als Innensechskant oder dergleichen.

Der Schaft 44 weist ausgehend von der Unterseite des Kopfs 42 zunächst einen glatten, gewindefreien Abschnitt 46 und anschließend an den gewindefreien Abschnitt 46 ein Gewinde 48 auf, das sich bis zum Ende des Schafts 44 erstreckt. Die Unterseite des Kopfs 42 liegt auf der Oberseite der Unterstützungsschiene 14A auf. Mit den Porenbetonschrauben 16 wird die Unterstützungsschiene 14A gegen die erste Außenseite 18 des Porenbetonträgers 40 vorgespannt, zumindest wird die Unterstützungsschiene 14A in Anlage an die erste Außenseite 18 gehalten. Gegenüberliegend der ersten Außenseite 18 ist die zweite Außenseite 20 angeordnet.

Im Volumen des Porenbetonträgers 40 sind zwei Armierungen 50 zu erkennen. Die Armierungen 50 können beispielsweise als Ringarmierungen ausgeführt sein. Die Porenbetonschrauben 16 sind so im Porenbetonträger 40 angeordnet, dass sie die Armierungen 50 nicht berühren.

Die Porenbetonschrauben 16 sind jeweils in Bohrlöcher 52 in dem Porenbetonträger 40 eingeschraubt. Die Bohrlöcher 52 sind als Sacklöcher ausgebildet und eine Tiefe der Bohrlöcher ist größer als die Hälfte der Dicke des Porenbetonträgers 40, aber kleiner als die Dicke des Porenbetonträgers 40. Bei einem Porenbetonträger von etwa 20 bis 30 cm Dicke erstrecken sich die Bohrlöcher bis etwa 5 cm vor die zweite Außenseite 20 des Porenbetonträgers 40. Die Bohrlöcher 52 weisen einen Durchmesser auf, der dem Kerndurchmesser der Porenbetonschrauben 16 entspricht. Der Kerndurchmesser wird zwischen zwei Gewindegängen des Gewindes 48 gemessen. Der Bohrlochdurchmesser kann auch geringfügig kleiner sein als der Kerndurchmesser und beispielsweise zwischen 90 % und 100 % des Kerndurchmessers des Schafts 44 der Porenbetonschrauben 16 liegen. Dadurch ist sichergestellt, dass die Gewindeflanken des Gewindes 48 in den Porenbeton 12 des Porenbetonträgers 40 eingreifen.

Bevor die Porenbetonschrauben 16 in die Bohrlöcher 52 eingeschraubt werden, wird ein fließfähiger Kleber in die Bohrlöcher eingebracht. Dieser fließfähige Kleber ist im nicht ausgehärteten Zustand niedrigviskos und weist etwa die Viskosität von warmem Honig auf. Die Viskosität des fließfähigen Klebers ist so bemessen, dass dieser in die Poren des Porenbetons 12 eingepresst werden kann und dann dort aushärten kann.

Beim Einschrauben der Porenbetonschrauben 16 wird der fließfähige Kleber durch den Schaft 44 der Porenbetonschraube 16 aus dem Bohrloch verdrängt, so dass der fließfähige Kleber in einen Bereich 54 des Porenbetons 12 eingepresst wird, der das Bohrloch umgibt und der in Fig. 3 schematisch angedeutet ist. In diesen Bereich 54 greifen auch die Gewindeflanken des Gewindes 48 der Porenbetonschraube 16 ein. Nach dem Aushärten des Klebers greifen die Gewindeflanken des Gewindes 48 somit in den Bereich 54 ein, der durch den ausgehärteten Kleber gegenüber dem übrigen Porenbeton 12 des Porenbetonträgers 40 wesentlich verstärkt ist. Die Haltekraft der Porenbetonschrauben 16 kann dadurch gegenüber dem Porenbeton 12 ohne Kleber wesentlich erhöht werden. Ein Teil des fließfähigen Klebers tritt beim Einschrauben der Porenbetonschrauben 16 auch aus der Oberseite der Bohrlöcher aus und füllt einen Zwischenraum zwischen dem Schaft 44 und der Innenwand der Durchgangsöffnung in der Unterstützungsschiene 14A aus. Eine seitliche Bewegung der Unterstützungsschiene 14A relativ *zum Schaft 44 der Schraube wird dadurch verhindert, so dass die Unterstützungsschiene 14A eine Zugbandwirkung hat.*

Fig. 4 zeigt eine abschnittsweise Darstellung eines weiteren erfindungsgemäßen Porenbetonträgers 50, der mit einer ebenfalls nur abschnittsweise dargestellten Verstärkung 62 mit einer Unterstützungsschiene 14A und einer Porenbetonschraube 16 versehen wurde. Zwischen der Oberseite der Unterstützungsschiene 14A und der Unterseite des Kopfs der Porenbetonschraube 16 ist eine große Unterlegscheibe 64 angeordnet, die wie die Unterstützungsschiene 14A aus Aluminium besteht. Zwischen der Oberseite der großen Beilagscheibe 64 und der Unterseite des Kopfs der Porenbetonschraube 16 ist eine kleine Beilagscheibe 66 angeordnet. Die Dicke der großen Beilagscheibe 64 ist wesentlich größer als die Dicke der kleinen Beilagscheibe 66 und beispielsweise dreimal bis viermal so groß. Der Durchmesser der großen Beilagscheibe 64 ist etwa doppelt so groß wie der Durchmesser der kleinen Beilagscheibe 66. Die kleine Beilagscheibe 66 kann beispielsweise aus Stahl bestehen oder kann auch an der Unterseite des Kopfs der Porenbetonschraube 16 einstückig ausgebildet sein. Die beiden Beilagscheiben 64, 66 dienen dazu, eine Vorspannkraft, die von der Unterseite des Kopfs der Porenbetonschraube 16 aufgebracht wird, gleichmäßig auf die Unterstützungsschiene 14A zu verteilen. Die Unterstützungsschiene 14A liegt mit ihrer Unterseite an einer ersten Außenseite 18 des Porenbetonträgers 60 an.

Mit der erfindungsgemäßen Verstärkung können bestehende Bauwerke, die Porenbetonträger als Dachelemente, als Fassadenelemente oder auch als Türsturzelemente oder Fenstersturzelemente einsetzen, so verstärkt werden, dass sie eine erhöhte Tragfähigkeit aufweisen und dass an oder auf diesen Bauwerken beispielsweise Solaranlagen oder Dachbegrünungen angeordnet werden können. Werden zum Herstellen von Bauwerken erfindungsgemäße Porenbetonträger verwendet, so können die Dachlasten solcher Bauwerke wesentlich erhöht werden und auch die Tragfähigkeit von Fassaden aus den erfindungsgemäßen Porenbetonträgern kann wesentlich erhöht werden gegenüber der Verwendung konventioneller Porenbetonträger.

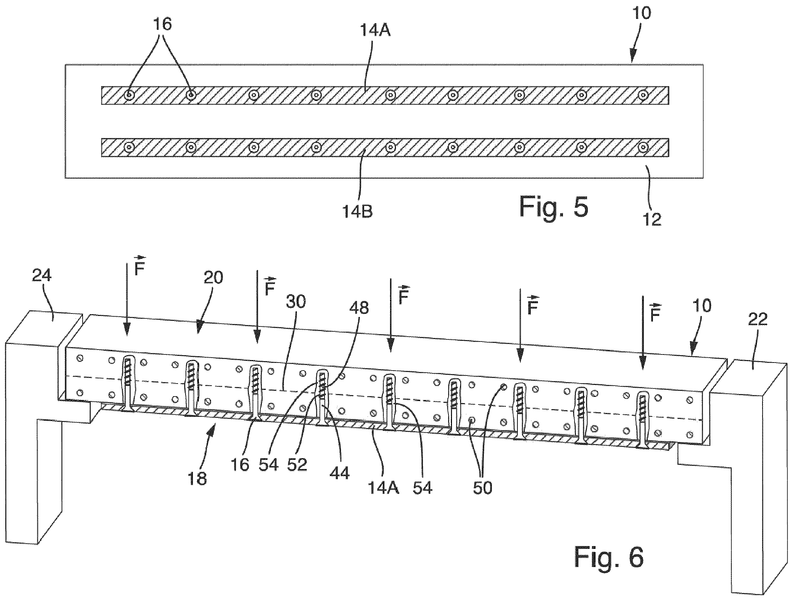

Fig. 5 zeigt eine Unteransicht eines erfindungsgemäßen Porenbetonträgers 10 gemäß einer fünften Ausführungsform der Erfindung. Der Porenbetonträger 10 unterscheidet sich von dem Porenbetonträger 10 der Fig. 1 lediglich in der Ausbildung der Unterstützungsschienen 14A, 14B und der Porenbetonschrauben 16. Infolgedessen werden lediglich die Unterschiede des Porenbetonträgers 10 der Fig. 5 zum Porenbetonträger 10 der Fig. 1 erläutert.

Die Unterstützungsschienen 14A, 14B bestehen jeweils aus faserverstärktem Kunststoff, beispielsweise glasfaserverstärktem Epoxidharz. Die Unterstützungsschienen 14A, 14B weisen jeweils 9 Durchgangsöffnungen auf, in die jeweils eine Porenbetonschraube 16 eingesteckt ist. Die beiden Unterstützungsschienen 14A, 14B sind parallel zueinander angeordnet und enden jeweils vor der Stirnseite des Porenbetonträgers 10. Die Unterstützungsschienen 14A, 14B enden somit vor dem Bereich des Porenbetonträgers 10, in dem dieser auf ein Auflager eines Bauwerks aufgelegt wird, vergleiche Fig. 6. Fig. 6 zeigt den Porenbetonträger 10 der Fig. 5 in einer Schnittansicht und im aufgelegten Zustand auf zwei Auflager 22, 24 eines im Übrigen nicht weiter dargestellten Bauwerks. Der Porenbetonträger 10 kann beispielsweise als Dachelement verwendet werden und wird von seiner zweiten Außenseite 20 her daher mit einer Flächenbelastung F belastet.

Von der ersten Außenseite 18 her sind die mehreren Porenbetonschrauben 16 in vorgebohrte Bohrlöcher in dem Porenbetonträger 10 eingeschraubt worden. Wie Fig. 6 zu entnehmen ist, sind die Bohrlöcher so gesetzt worden, dass sie sich nicht mit Armierungen 50 des Porenbetonträgers 10 kreuzen. Wenn die Bohrlöcher oder in eingeschraubtem Zustand die Porenbetonschrauben die Armierungen 50 berühren, ist dies unschädlich. Möglicherweise wird eine Belastung von den Porenbetonschrauben 16 sogar bei Berührung der Armierung gleichmäßiger auf das Volumen des Porenbetonträgers 10 verteilt. Im Rahmen der Erfindung wird aber angestrebt, die Bohrlöcher und auch die Porenbetonschrauben so zu setzen, dass diese die Armierungen 50 nicht berühren.

Es ist in der Schnittansicht der Fig. 6 zu erkennen, dass die Durchgangsöffnungen in der Unterstützungsschiene 14A zunächst kegelstumpfförmig angesenkt sind und dann noch einen kurzen, kreiszylindrischen Abschnitt aufweisen. Die Porenbetonschrauben 16 weisen Senkköpfe auf. Eine kegelstumpfförmige Unterseite der Köpfe der Porenbetonschrauben 16 liegt damit flächig in der kegelstumpfförmigen Ansenkung der Durchgangsöffnung in der Unterstützungsschiene 14A an. Die Oberseite der Köpfe der Porenbetonschrauben 16 ist bündig mit einer Oberseite der Unterstützungsschiene 14A angeordnet, wobei mit der Oberseite in Fig. 6 die untenliegende Außenseite der Unterstützungsschiene 14A gemeint ist. Vor dem Eindrehen der Porenbetonschrauben wird ein fließfähiger flüssiger Kleber in die Bohrlöcher eingebracht, wie anhand der Fig. 1 bis 4 erläutert wurde. Dieser Kleber wird beim Eindrehen der Porenbetonschrauben aus dem jeweiligen Bohrloch verdrängt und dringt in einen Bereich 54 ein, der die gesamte Länge des Bohrlochs umgibt. Der fließfähige Kleber dringt nicht nur in den Porenbeton ein, der das Bohrloch im Porenbetonträger 10 umgibt, sondern wird auch aus dem Bohrloch heraus bis in den kreiszylindrischen Abschnitt der Durchgangsöffnung in der Unterstützungsschiene 14A gedrückt. Dort füllt der fließfähige Kleber den Zwischenraum zwischen der Innenwand des kreiszylindrischen Abschnitts der Durchgangsöffnung und dem Außenumfang des Schafts der Porenbetonschraube 16 aus. Auch dadurch wird eine relative Verschiebung der Unterstützungsschiene 14A zu den Porenbetonschrauben 16 und damit zu dem Porenbetonträger 10 vermieden. Bei Belastung des Porenbetonträgers 10 mit der Flächenbelastung F übt die Unterstützungsschiene 14A einen Zugbandeffekt aus, mit dem der Porenbetonträger 10 verstärkt wird. Infolgedessen kann die Belastung F größer sein als bei Porenbetonträgern ohne Verstärkung.

Wie Fig. 6 zu entnehmen ist, endet die Unterstützungsschiene 14A jeweils kurz vor den Auflagern 22, 24.

Die Porenbetonschrauben 16 sind gleichmäßig über die Länge des Porenbetonträgers 10 verteilt. Wenn in einem Sonderfall der Porenbetonträger 10 mit einer punktuell höheren Belastung belastet wird, kann die Verstärkung in diesem höher belasteten Bereich mehrere Porenbetonschrauben 16 in engerem Abstand aufweisen als in weniger stark belasteten Bereichen.

Fig. 8 zeigt den Porenbetonträger 10 der Fig. 5 und 6 neben zwei weiteren Porenbetonträgern 26, 28 im geschnittenen Zustand und im eingebauten Zustand in einem Bauwerk. Lediglich das Auflager 22 aus Fig. 6 ist dargestellt. Es ist zu erkennen, dass die Porenbetonträger 10, 26, 28 mit einem Nut-Feder-System versehen sind, mit dem sie an ihren Längskanten ineinander eingreifen. Gut zu erkennen ist die parallele Anordnung der Unterstützungsschienen 14A, 14B. Es ist weiter zu erkennen, dass die Porenbetonschrauben 16 die Armierungen 50 in den Porenbetonträgern nicht berühren.

Fig. 7 zeigt eine abschnittsweise Unteransicht der Porenbetonträger 10, 26, 28. An dem in Fig. 7 oberen Ende ist eine Schnittebene angeordnet, und auch das in Fig. 7 untere Ende ist abgeschnitten dargestellt. Der Blick geht in Fig. 7 auf die jeweils erste Außenseite der Porenbetonträger 10, 26, 28, auf denen jeweils zwei parallel zueinander angeordnete Unterstützungsschienen 14A, 14B angeordnet sind.

Der Abstand der Unterstützungsschienen 14A, 14B auf dem Porenbetonträger 10 ist größer als der Abstand der Unterstützungsschienen 14A, 14B auf den Porenbetonträgern 26, 28. Der Abstand der Unterstützungsschienen 14A, 14B kann je nach der erwarteten Belastung der Porenbetonträger 10, 26, 28 angepasst werden.

## Patentansprüche

1. Verstärkung für einen Porenbetonträger (10; 40; 60) mit mehreren Porenbetonschrauben (16), wobei jede Porenbetonschraube (16) einen Kopf (42) mit einer Antriebsausbildung und einen zylindrischen Schaft aufweist, mit wenigstens einer langestreckten Unterstützungsschiene (14A, 14B) mit mehreren, im Abstand zueinander angeordneten Durchgangsöffnungen zum Durchstecken von jeweils einer Porenbetonschraube (16) und mit einem fließfähigen Kleber zum Einbringen in mehrere Bohrlöcher (52) in dem Porenbetonträger (10; 40; 60), wobei die Bohrlöcher (52) zum Einschrauben der Porenbetonschrauben (16) ausgebildet und angeordnet sind, **dadurch gekennzeichnet, dass** jede Porenbetonschraube (16) mit einem Gewinde (48) versehen ist, das sich ausgehend von einem freien Ende des Schafts (44) in Richtung auf den Kopf (42) der Porenbetonschraube (16) erstreckt, wobei das Gewinde (48) sich maximal über 50% der Länge des Schafts (44) erstreckt, dass die langgestreckte Unterstützungsschiene (14A, 14B) in Form einer außenliegenden Bewehrung für die Anordnung auf einer ersten Außenseite (18) des Porenbetonträgers (10; 40; 60) ausgebildet ist, wobei die erste Außenseite (18) einer zweiten Außenseite (20), auf die eine Haupttraglast (F) aufgebracht wird, gegenüberliegt, und dass der fließfähige Kleber niedrigviskos ist und in einem nicht ausgehärteten, fließfähigen Zustand, in dem er in ein Bohrloch eingebracht wird, beim Einschrauben der Porenbetonschraube (16) in das Bohrloch in die Poren des Porenbetonträgers (10; 40; 60) eingepresst werden und dort aushärten kann.

2. Verstärkung nach Anspruch 1, **dadurch gekennzeichnet, dass** die wenigstens eine Unterstützungsschiene (14A, 14B) als faserverstärkte Kunststoffschiene oder als Aluminiumschiene ausgebildet ist, insbesondere **dadurch gekennzeichnet, dass** die Durchgangsöffnungen in der Unterstützungsschiene (14A, 14B) gleichmäßig voneinander beabstandet sind.

3. Verstärkung nach wenigstens einem der vorstehenden Ansprüche, **dadurch gekennzeichnet, dass** der Schaft jeder Porenbetonschraube (16) kürzer ist als die Dicke des Porenbetonträgers (10; 40; 60) aber länger ist als die Hälfte der Dicke des Porenbetonträgers (10; 40; 60), insbesondere **dadurch gekennzeichnet, dass** die Länge des Schafts (44) jeder Porenbetonschraube (16) zwischen 60 Prozent und 90 Prozent, insbesondere 75 Prozent, der Dicke des Porenbetonträgers (10; 40; 60) beträgt, insbesondere **dadurch gekennzeichnet, dass** die Länge eines gewindefreien Abschnitts des Schafts (44) jeder Porenbetonschraube (16) zwischen 40 Prozent und 70 Prozent der Dicke des Porenbetonträgers (10; 40; 60) beträgt.

4. Verstärkung nach einem der vorstehenden Ansprüche, **dadurch gekennzeichnet, dass** der Gewindedurchmesser des Gewindes der Porenbetonschrauben (16) zwischen 10% und 65% größer ist als ein Kerndurchmesser des Gewindes der Porenbetonschrauben (16), insbesondere **dadurch gekennzeichnet, dass** die Durchgangsöffnungen in den Unterstützungsschienen 14A, 14B kegelstumpfförmig angesenkt sind und dass eine Unterseite von Köpfen der Porenbetonschrauben (16) mit einer hierzu passenden Kegelstumpfform versehen ist.

5. Porenbetonträger (10; 40; 60) mit einer Verstärkung nach einem der vorstehenden Ansprüche, **dadurch gekennzeichnet, dass** die Verstärkung wenigstens eine langgestreckte Unterstützungsschiene (14A, 14B) mit mehreren, im Abstand voneinander angeordneten Durchgangsöffnungen und mehrere Porenbetonschrauben (16) aufweist, wobei die Unterstützungsschiene (14A, 14B) auf einer ersten Außenseite des Porenbetonträgers angeordnet ist und die Porenbetonschrauben (16) durch die Durchgangsöffnungen in der Unterstützungsschiene (14A, 14B) hindurchgesteckt und in Bohrlöcher (52) in dem Porenbetonträger eingeschraubt sind, so dass eine Unterseite eines Kopfes (42) der Porenbetonschrauben (16) an einer Oberseite der Unterstützungsschiene (14A, 14B) anliegt, wobei ein Durchmesser der Bohrlöcher (52) gleich einem Kerndurchmesser des Schafts (44) der Porenbetonschrauben (16), 10% größer oder 10% kleiner als ein Kerndurchmesser des Schafts (44) ist, so dass das Gewinde der Porenbetonschraube (16) in den Porenbeton (12) eingreift, wobei vor dem Einschrauben der Porenbetonschrauben (16) in die Bohrlöcher (52) ein fließfähiger Kleber in die Bohrlöcher (52) eingebracht wird, wobei beim Einschrauben der Porenbetonschrauben (16) der fließfähige Kleber wenigstens abschnittsweise in einen, das Bohrloch umgebenden Bereich des Porenbetons (12) eingepresst wird und dort aushärtet, so dass im ausgehärteten Zustand des Klebers das Gewinde (48) der Porenbetonschraube (16) in Bereiche des Porenbetons (12) eingreift, die mit dem ausgehärteten Kleber durchsetzt sind, und wobei das Gewinde (48) der Porenbetonschrauben (16) an einem vom Kopf (42) der Porenbetonschraube (16) beabstandeten Ende des Schafts (44) beginnt und in einem Abstand von der Unterseite des Kopfes (42) der Porenbetonschraube (16) endet.

6. Porenbetonträger nach Anspruch 5, **dadurch gekennzeichnet, dass** ein Durchmesser der Bohrlöcher (52) zwischen 90% und 100% des Kerndurchmessers des Schafts (44) der Porenbetonschraube (16) liegt, insbesondere **dadurch gekennzeichnet, dass** sich das Gewinde (48) der Porenbetonschraube (16) über maximal 50 % der Länge des Schafts (44) der Porenbetonschraube (16) erstreckt.

7. Porenbetonträger nach einem der Ansprüche 5 bis 6, **dadurch gekennzeichnet, dass** ausgehend von der ersten Außenseite (18) des Porenbetonträgers (10; 40; 60), auf der die Unterstützungsschiene (14A, 14B) angeordnet ist, ein gewindefreier Bereich des Schafts (44) eine Länge aufweist, die zwischen 25% und 75% der Dicke des Porenbetonträgers (10; 40; 60) beträgt, insbesondere **dadurch gekennzeichnet, dass** das Gewinde (48) der Porenbetonschraube (16) ausschließlich in einem Abschnitt des Porenbetonträgers (10; 40; 60) angeordnet ist, der in Dickenrichtung gesehen in der Hälfte des Porenbetonträgers (10; 40; 60) liegt, die von der ersten Außenseite (18), auf der die Unterstützungsschiene (14A, 14B) aufliegt, beabstandet ist.

8. Porenbetonträger nach einem der Ansprüche 5 bis 7, **dadurch gekennzeichnet, dass** die Unterstützungsschiene (14A, 14B) auf der ersten Außenseite (18) des Porenbetonträgers (10; 40; 60) angeordnet ist und die erste Außenseite (18) der zweiten Außenseite (20) des Porenbetonträgers (10; 40; 60), die für das Aufbringen der Hauptlast (F) vorgesehen ist, gegenüberliegt.

9. Porenbetonträger nach einem der Ansprüche 5 bis 8, **dadurch gekennzeichnet, dass** mehrere Unterstützungsschienen (14A, 14B) auf der ersten Außenseite (18) des Porenbetonträgers (10; 40; 60) parallel zueinander und in einem Abstand zueinander angeordnet sind, insbesondere **dadurch gekennzeichnet, dass** sich die wenigstens eine Unterstützungsschiene (14A, 14B) im Wesentlichen über die gesamte Länge des Porenbetonträgers (40; 60) erstreckt oder dass sich die wenigstens eine Unterstützungsschiene (14A, 14B) über den gesamten zugänglichen Bereich der ersten Außenseite des Porenbetonträgers (10) zwischen Auflagern (22, 24) für den Porenbetonträger (10; 40; 60) erstreckt.

10. Verwendung eines Porenbetonträgers (10; 40; 60) nach einem der Ansprüche 5 bis 9 in einem Bauwerk, wobei die Unterstützungsschiene (14A, 14B) als außenliegende Bewehrung auf einer ersten Außenseite (18) des Porenbetonträgers (10; 40; 60) angeordnet ist, die einer zweiten Außenseite (20) des Porenbetonträgers (10; 40; 60), an der eine Hauptlast (F) anliegt, gegenüberliegt.

11. Verwendung nach Anspruch 10, **dadurch gekennzeichnet, dass** sich die wenigstens eine Unterstützungsschiene (14A, 14B) auf der ersten Außenseite (18) des Porenbetonträgers (10) über die gesamte Länge zwischen Auflagern (22, 24) für den Porenbetonträger (10) erstreckt, insbesondere **dadurch gekennzeichnet, dass** die erste Außenseite (18) eine Unterseite des Porenbetonträgers (10; 40; 60) und die zweite Außenseite (20) eine Oberseite des Porenbetonträgers (10; 40; 60) bildet.

12. Verwendung nach Anspruch 10, oder 11, **dadurch gekennzeichnet, dass** der Porenbetonträger (10; 40; 60) in einem Bauwerk als Dachelement, als Fassadenelement und/oder als Fenstersturz- oder Türsturzelement eingesetzt wird.

13. Verfahren zum Verstärken eines Porenbetonträgers (10; 40; 60) mit einer Verstärkung nach wenigstens einem der Ansprüche 1 bis 4 mit folgenden Schritten: Bohren von mehreren Bohrlöchern (52) in eine erste Außenseite (18) des Porenbetonträgers (10; 40; 60), wobei die Bohrlöcher (52) einen Durchmesser haben, der kleiner oder gleich einem Kerndurchmesser des Schafts (44) der Porenbetonschrauben (16) der Verstärkung ist, und wobei die Bohrlöcher (52) eine Tiefe haben, die größer ist als die halbe Dicke des Porenbetonträgers (10; 40; 60) und kleiner ist als die Dicke des Porenbetonträgers (10; 40; 60), Anordnen der wenigstens einen Unterstützungsschiene (14A, 14B) der Verstärkung auf einer ersten Außenseite des Porenbetonträgers (10; 40; 60), Einbringen des fließfähigen Klebers der Verstärkung in die Bohrlöcher (52), Durchstecken der Porenbetonschrauben (16) durch die Durchgangsöffnungen in der Unterstützungsschiene (14A, 14B) und Einschrauben der Porenbetonschrauben (16) in die Bohrlöcher (52) bevor der fließfähige Kleber in den Bohrlöchern (52) ausgehärtet ist, wobei die Bohrschrauben (16) in die Bohrlöcher (52) eingeschraubt werden, bis eine Unterseite des Kopfs (42) der Porenbetonschrauben (16) auf einer Oberseite der Unterstützungsschiene (14A, 14B) aufliegt und wobei der fließfähige Kleber beim Einschrauben der Porenbetonschrauben (16) in einem das Bohrloch (52) umgebenden Bereich (54) eingepresst wird und dort aushärtet.

14. Verfahren nach Anspruch 13, **gekennzeichnet durch** Anordnen mehrerer Unterstützungsschienen (14A, 14B) auf der ersten Außenseite (18) des Porenbetonträgers (10; 40; 60), wobei die Unterstützungsschienen (14A, 14B) parallel und im Abstand zueinander angeordnet werden, insbesondere **dadurch gekennzeichnet, dass** die Unterstützungsschiene (14A, 14B) der Verstärkung so bemessen ist und so angeordnet wird, dass sich die Unterstützungsschiene (14A, 14B) entweder im Wesentlichen über die gesamte Länge des Porenbetonträgers (40; 60) erstreckt oder dass sich die Unterstützungsschiene (14A, 14B) über die gesamte Länge eines Bereichs der ersten Außenseite (18) erstreckt, der zwischen Auflagern (22, 24) für den Porenbetonträger (10) zugänglich ist.

15. Verwendung einer Verstärkung nach einem der Ansprüche 1 bis 4 zum Verstärken eines Porenbetonträgers (10; 40; 60), insbesondere **dadurch gekennzeichnet, dass** der Porenbetonträger (10; 40; 60) als Dachelement oder als Fassadenelement eines Bauwerks verbaut ist.
